(19) Europäisches Patentamt
European Patent Office
Office européen des brevets

(11) Publication number: 0 012 516 B1

# (12) EUROPEAN PATENT SPECIFICATION

(45) Date of publication of patent specification: 13.07.83

(51) Int. Cl.³: G 03 G 5/07, G 03 G 5/05, C 08 L 39/00

(21) Application number: 79302575.0

(22) Date of filing: 14.11.79

## (54) Electroconductive polymer compositions for use in the manufacture of electrographic papers and containing a fluorinated alkylphosphate ester.

(30) Priority: 15.11.78 US 960808

(43) Date of publication of application: 25.06.80 Bulletin 80/13

(45) Publication of the grant of the patent: 13.07.83 Bulletin 83/28

(84) Designated Contracting States: BE DE NL

(56) References cited:
US - A - 3 953 374
US - E - 28 543

(73) Proprietor: CALGON CORPORATION
Route 60-Campbell's Run Road
Robinson Township Pennsylvania 15205 (US)

(72) Inventor: Hwang, Mei H.
1013 Dale Drive
Pittsburgh, Pennsylvania 15220 (US)

(74) Representative: Crampton, Keith John Allen et al,
D YOUNG & CO 10 Staple Inn
London WC1V 7RD (GB)

EP 0 012 516 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Electroconductive polymer compositions for use in the manufacture of electrographic papers and containing a fluorinated alkylphosphate ester

This invention relates to electroconductive polymer compositions of the type that may be applied to surface-sized and non-surfaced-sized paper raw stock. The present invention is based on the discovery that, by incorporating into a conductive polymer an effective quantity of certain fluorosurfactants and a stabilizer, the solvent holdout and tack properties can be improved, so that paper coated with the compositions will have solvent holdout, conductivity and tack properties that are acceptable as electroconductive base stocks for electrographic and electrophotographic papers.

In general, electroconductive base sheets for use in the manufacture of electrographic and electrophotographic reproduction papers are prepared by applying to one or both surfaces of a suitable paper substrate (a publication grade paper of basis weight in the range of 30 to 45 pounds per 3,000 square feet, i.e. 0.049 to 0.047 kg/$m^2$) a resinous conductive layer to render the paper electroconductive. Commonly the conductive layer comprises an electroconductive polymer either alone or more usually, formulated with a binder (normally a water-soluble, non-conductive, film-forming polymer such as a protein, starch, styrene-butadiene latices, a modified or converted starch, casein, polyvinylacetate, polyvinylalcohol, copolymer of ethylene and vinylacetate, and the like) and with a pigment (such as calcium carbonate, kaolin clay, titanium dioxide, alumina or a combination of these materials). In the electrostatic paper industry, such formulations including a conductive agent, a binder and a pigment are commonly referred to as coating formulations or compositions.

The binders in conventional conductive coating formulations serve to make the paper less porous and more uniform, to improve the adherence of the conductive layer to the base paper and, importantly, to impart to the conductive layer the properties of a holdout or barrier coating to prevent solvents used in the later applied photosensitive or dielectric layers from penetrating into the conductivized paper. A separate non-conductive solvent holdout layer comprising one or a mixture of conventional binders is applied to the paper prior to the application of the conductive layer in order to assist in achieving a solvent holdhout effect. Solvent holdout to toluene and, in some cases, paraffinic solvents is essential because the top side of a conductive base paper comes into contact with toluene during the subsequent application of the photo-sensitive or dielectric coating which comprises dye-sensitized zinc oxide or dielectric resin dispersed in toluene and a binder. In some cases, the back of the zinc oxide or dielectric coated base stock (now referred to as finished Electrofax or dielectric paper) comes into contact with kerosene during the copying process inside copy machines that use "wet" toners which are composed of carbon particles suspended in a solution of kerosene and binders. The usual type of electroconductive polymer in combination with the usual type of coating additives, such as the binders and pigments mentioned above, will not give acceptable solvent holdout when applied at commercially feasable coatweights of form 1 to 4 pounds of coating per 3,000 square feet i.e. 1.6 to 6.5 g/$m^2$ of paper surface where attempts are made to prepare the conductive base sheet in an obviously desirable one-pass process without pretreatment of the paper raw stock with a separate solvent holdout layer.

The present invention is based upon the discovery that the temperature stability and solvent holdout properties of conventional electroconductive polymers commonly used in such formulations can be markedly enhanced by incorporating into such polymers an effective quantity of a stabilizer, such as caustic soda, and a fluorosurfactant of the type hereinafter described. U.S. Patent No US - A - 3,953,374 discloses a composition comprising a water-soluble electroconductive polymer and a fluorinated alkyl phosphate ester, but this is not added to improve the stability of the composition.

The improved polymer composition of this invention will give to the conductive base sheet conductivity, zinc oxide and dielectric resin topcoatability, rebrokability of broke and enhanced solvent holdout properties and low tack that are commercially acceptable for the manufacture of electrographic and electrophotographic papers according to current industry standards and practices when applied to a non-surface sized raw stock (a raw stock that has no surface treatment of starch, alginate or other surface sizing material), as well as barrier coated raw stock. The improved polymer composition of this invention, therefore, not only possesses temperature stability and provides enhanced solvent holdout and reduced tack properties, but makes possible the application of the electroconductive layer to the base sheet in a one-pass operation thus eliminating any necessity for the application of separate solvent holdout layers. The conductivity, zinc oxide and dielectric topcoatability, rebrokability and solvent holdout properties obtained through the use of the improved polymer composition of this invention have been confirmed employing standard laboratory techniques. It is contemplated, therefore, that suitable coatweights of the improved polymer composition of this invention will be employed in the manufacture of electroconductive base sheets suitable for the preparation of electrophotographic and electrographic papers.

The nature of the electroconductive polymer component of the improved polymer composition of this invention is not critical. Any of a variety of electroconductive polymers, both cationic and anionic, may be employed provided that the conductive polymer selected has a Brookfield Viscosity at 25°C. of less than about 1500 m.Pa.s and is capable of imparting adequate conductivity to the base raw stock (industry requirements for conductivity in base sheets are $10^8$ to $10^{10}$ (ohms per square decimeter at 15% relative humidity). As cationic electroconductive polymers, there may be employed any water-soluble cationic polymer containing quaternary ammonium functional groups. Included in such cationic polymers are those of the formula:

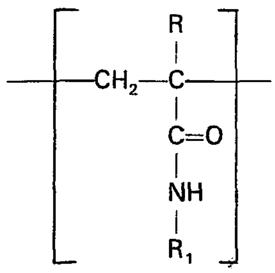

or

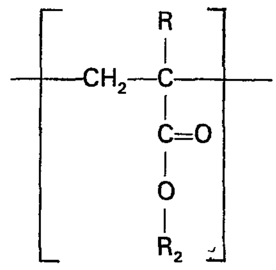

wherein:

R stands for hydrogen or lower alkyl;

$R_1$ represents a member of the class composed of:

$$-A-\overset{\oplus}{N}-(R_2)_3$$

or

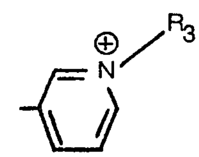

$R_2$ stands for

$$-A-\overset{\oplus}{N}-(R_3)_3$$

wherein, in turn, A represents a lower alkylene, an hydroxy-lower alkylene or lower- alkyl-substituted lower alkylene group, and $R_3$ stands for a lower alkyl group.

These polymers include those wherein the quaternary ammonium functional group is carried as a pendant group to the principal polymer chain, such as, for example, polyvinyl benzyl trimethyl ammonium chloride, poly-[alpha-(methylene trimethyl ammonium chloride) ethylene oxide] and poly(methacryloloxyethyl trimethyl ammonium chloride). Also useful are those polymers wherein the quaternary ammonium functional group is incorporated in a cyclic structure which comprises a portion of the polymer backbone, such as, for example, polymers containing repeating units of the formula:

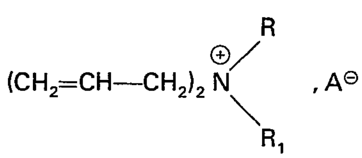

where R is an alkyl group of 1 to 18 carbon atoms and $R_1$ is R or $\beta$-propionamido and A is an anion. A preferred polymer of this class is poly-(dimethyldiallyl ammonium chloride); and those wherein the quaternary ammonium functional group forms a part of the polymer chain, such cationic polymers being commonly designated as, "ionenes".

Included in this group, for example, are ionene polymers prepared from halo alkyl dialkyl amine monomer units, such as 3-ionene(poly-dimethyl propyl)amminium chloride), prepared by the polymerization of 3-chloropropyl dimethyl amine, and ionene polymers prepared from di-tertiaryamines and dihalides, such as 3,4-ionene which is prepared from 1,3-bis-dimethylamino propane and 1,4-dichlorobutene. Other ionene polymers, of course, which are prepared similarly, may be employed as the electroconductive component of the polymer composition of this invention.

In addition to the cationic electroconductive polymers mentioned above, water-soluble cationic phosphonium and sulfonium polymers also may be employed as the electroconductive component in the polymer composition of this invention. Included among these are polymers, such as, for example, poly-(2-acryloxyethyldimethyl sulfonium chloride) and poly-(glycidyltributyl phosphonium chloride) and the like.

Water-soluble anionic polymers useful in the preparation of the polymer composition of this invention typically are polymeric acids and alkali metal and alkaline earth metal salts. Included among such anionic polymers are, for example, poly(sulfostyrene), poly(allyl sulfonic) acid, sulfonated ureaformaldehyde resin, sulfonated polymethylolacrylamide and the like.

It should be noted that the typical cationic and anionic polymers mentioned above may contain one or more other mer units. For example, copolymers such as the copolymer of dimethyl diallyl

ammonium chloride and diacetone acrylamide or the copolymer of styrene and maleic anhydride also can be used as the electroconductive component of the polymer composition of this invention. The ratio of mer units in such copolymers will be determined by the quantity of cationic or anionic necessary to impart the desired surface resistivity to the base sheet.

Although any of the electroconductive polymers noted above or other electroconductive polymer capable of imparting the necessary degree of surface resistivity to the base sheet may be employed as the electroconductive component is the improved polymer composition of this invention, the preferred electroconductive polymers are the cationic polymers and copolymers and especially cationic quaternary ammonium polymers and copolymers. Of these, the most preferred polymers ae poly-(dimethyldiallylammonium chloride), copolymers of dimethyl diallyl ammonium chloride and diacetone acrylamide containing from 70 to 98% diallyl monomer, polyvinylbenzyl trimethyl ammonium chloride, poly-methacryloxyethyl trimethyl ammonium chloride, poly-methacryloloxytrimethylammonium methosulfate, polyepichlorohydrin 80 to 100% quaternized with trimethylamine, copolymers of acrylamide and methacryloloxyethyl trimethyl ammonium chloride containing from 90 to 99.5% methacryloloxyethyl monomer and poly(methacryloloxyethyl dimethyl hydroxyethyl ammonium chloride).

The fluorosurfactant component of the improved electroconductive polymer composition of this invention is essential to achieving the enhanced solvent holdout properties displayed by the improved polymer composition. The present invention provides an electroconductive polymer composition containing from 90 to 99.5% by weight of a water-soluble electroconductive polymer; sufficient amounts of a stabilizer to adjust the pH to 8.0 or more: and from 0.5 to 10% by weight of the polymer composition of a (mono or)bis-(fluorinated alkyl)phosphate ester of the formula:

$$(C_mF_{2m+1}C_nH_{2n}O)_yPO(OM)_{3-y}$$

or an ammonium bis(N-ethyl-2-perfluoroalkylsulfonamide ethyl) phosphate containing not more than 15% ammonium mono(N-ethyl-2-perfluoroalkylsulfonamido ethyl) phosphate, in which the alkyl group is more than 95% $C_8$ and the salts have a fluorine content of 50.2% to 52.8% as determined on a solids basis. Materials of this type are sold by 3M Co., Inc., under the Trademark Scotchban. In the formula, *m* is an integer between 4 and 10, *n* is an integer between 1 and 11, *y* is 1 or 2 and M is a water-solubilizing cation, for example, an alkali metal (Li, K or Na), ammonium or substituted ammonium including methylamine, dimethylamine, diethylamine, monoethanolamine, diethanolamine, triethanolamine and morpholine. Preferred salts generally are the diethanolamine salts. Desirably, $C_m$ and $C_n$, taken together, constitute a straight chain of at least 8 carbon atoms. Such perfluoroalkyl phosphate esters are well known materials and are available commercially or readily prepared by methods fully described in the literature. Particularly preferred is the perfluoroalkyl phosphate ester manufactured by E. I. du Pont de Nemours Company, Inc., Wilmington, Delaware, under the Trademark Zonyl RP and Zonyl FSE, which contain diethanolamine salts of mono- and bis-fluorinated alkyl) phosphates in which the alkyl group is even-numbered in the range $C_8$—$C_{18}$ and the salts have a fluorine content of 52.4 to 54.4% as determined on a solids basis.

Suitable stabilizers such as caustic soda, potassium hydroxide and ammonium hydroxide are added to the polymer composition to control the pH of the polymer and impart temperature stability thereto. The composition of the instant invention is stable at a pH of 8.0 or more.

The weight percent of the several components of the novel polymer composition of this invention may vary greatly. In general, they contain from 90 to 99.5% by weight electroconductive polymer, 0.5 to 10% by weight fluorosurfactant and sufficient stabilizer to adjust the pH to 8.0 or more.

The weight percent (dry coating) of the components in the coating formulations using the polymer composition of this invention may vary widely. In general, the electroconductive polymer composition of this invention will constitute from 0.5 to 95% by weight of the formulation; the binder will constitute from 5 to 80% by weight of the formulation. If desirable, the formulation may also contain from 5 to 95% by weight of a pigment. Such formulations are typical of the coating formulations typically employed in the manufacture of electroconductive base sheets.

The results set forth in the following tables illustrate the benefits of the stabilizer of the instant invention.

TABLE I

APPEARANCES OF 25% POLYMER 261LV/ZONYL RP (98/2) SOLUTIONS MADE WITH POLYMER 261LV OF VARIOUS VISCOSITIES

| Brookfield Viscosity (mPa.s) at 25°C. | Solution Appearance As Prepared |
|---|---|
| 550 | Slightly Cloudy |
| 700 | Slightly Cloudy |
| 1000 | Slightly Cloudy |
| 1100 | Slightly Cloudly |
| 1400 | Cloudy |
| 1890 | Precipitation on Top and Bottom of Solution |

TABLE II

STABILITY OF POLYMER 261LV/ZONYL RP AT VARIOUS pH ADJUSTED BY DIFFERENT CHEMICALS

| pH | NaOH at 25°C. | $NH_4OH$ at 25°C. | $Na_2CO_3$ at 25°C. | KOH at 25°C. |
|---|---|---|---|---|
| 24 Hours | | | | |
| 8.0 | 2 | 2 | 2 | 2 |
| 8.5 | 1 | 2 | 2 | 2 |
| 9.0 | 1 | 1 | 1 | 1 |
| 9.5 | 1 | 1 | 2 | 1 |
| 10.0 | 1 | 1 | 2 | 1 |
| 10.5 | 1 | 1 | 2 | 1 |
| 11.0 | 1 | 2 | 2 | 1 |
| 48 Hours | | | | |
| 8.0 | 2 | 2 | 2 | 2 |
| 8.5 | 2 | 2 | 2 | 2 |
| 9.0 | 1 | 1 | 1 | 1 |
| 9.5 | 1 | 1 | 2 | 1 |
| 10.0 | 1 | 1 | 2 | 1 |
| 10.5 | 1 | 1 | 2 | 1 |
| 11.0 | 1 | 2 | 2 | 1 |
| 5 Days | | | | |
| 8.0 | 2 | 2 | 2 | 2 |
| 8.5 | 2 | 2 | 2 | 2 |
| 9.0 | 1 | 1 | 1 | 1 |
| 9.5 | 1 | 1 | 2 | 1 |
| 10.0 | 1 | 1 | 2 | 1 |
| 10.5 | 1 | 1 | 2 | 1 |
| 11.0 | 1 | 2 | 2 | 1 |

1 — Stable Solutions

2 — Solutions Contain Sediment

TABLE III

COMPOSITION AND STABILITY OF CONDUCTIVE POLYMER PRODUCTS CONTAINING FLUOROCARBONS

| | Storage Stability Tests (5 days) | | |
|---|---|---|---|
| Composition* | 4°C. | 25°C. | 45°C. |
| 97.78% CP—261 LV<br>2.00% Scotchban FC—809<br>0.22% NaOH<br>(pH of 20% solids solution was 8.8) | uniform, no sediment | uniform, no sediment | uniform, no sediment |
| 97.78% Polymer E—949<br>2.00% Zonyl RP<br>0.22% NaOH<br>(pH of 20% solids solution was 8.6) | uniform, no sediment | uniform, no sediment | uniform, no sediment |
| 97.78% ECR—77<br>2.00% Zonyl RP<br>0.22% NaoH<br>(pH of 20% solids solution was 8.5) | uniform, no sediment | uniform, no sediment | uniform, no sediment |

CP—261 LV is a homopolymer of dimethyl diallyl ammonium chloride.

Polymer E—949 is a copolymer of 90% by weight dimethyl diallyl ammonium chloride and 10% by weight acrylamide.

ECR—77 is a homopolymer of benzyl trimethyl ammonium chloride.

*The formulations were prepared at 20% solids with water as the diluent.

## Claims

1. An electroconductive polymer composition containing from 90 to 99.5% by weight of a water-soluble electroconductive polymer; sufficient amounts of a stabilizer to adjust the pH to 8.0 or more; and from 0.5 to 10% by weight of the polymer composition of a (mono or)bis-(fluorinated alkyl)phosphate ester of the formula:

$$(C_mF_{2m+1}C_nH_{2n}O)_yPO(OM)_{3-y}$$

where $m$ is an integer between 4 and 10, $n$ is an integer between 1 and 11, $y$ is 1 or 2 and M is a water-solubilizing cation; or of an ammonium bis-(N-ethyl-2-perfluoroalkylsulfonamide ethyl) phosphate containing not more than 15% ammonium mono(N-ethyl-2-perfluoroalkylsulfonamido ethyl) phosphate in which the alkyl group is more than 95% $C_8$, the fluorine content is 50.2% to 52.8% as determined on a solids basis.

2. A composition as claimed in Claim 1 in which the stabilizer is potassium hydroxide, sodium hydroxide or ammonium hydroxide.

3. A composition as claimed in Claim 1 or 2 in which the water-solubilizing cation is diethanolamine and $C_m$ and $C_n$, taken together, constitute a straight chain of at least eight carbon atoms.

4. An electroconductive polymer composition as claimed in Claim 3 in which the fluorocarbon is a diethanolamine salt of a (mono or bis)-(fluorinated alkyl)phosphate having the formula set forth in Claim

1 in which the alkyl group is even-numbered in the range $C_8$—$C_{18}$, the fluorine content is 52.4 to 54.4% as determined on a solids basis, and M is an alkali metal, ammonium or substituted ammonium cation.

5. A composition as claimed in any preceding claim in which the electroconductive polymer is a cation-quaternary ammonium polymer.

6. A composition as claimed in claim 5 in which the cationic-quaternary ammonium polymer is poly(dimethyl diallyl ammonium chloride), a copolymer of dimethyl diallyl ammonium chloride and diacetone acrylamide containing from 70 to 98% of diallyl monomer units, polyvinylbenzyl trimethylammonium chloride, polymethacryloloxyethyl trimethyl ammonium chloride, polymethacryloloxyethyl trimethyl ammonium methosulfate, polyepichlorohydrin 80 to 100% quaternized with trimethylamine, a copolymer of acrylamide and methacryloloxyethyl trimethyl ammonium chloride containing from 90 to 99.5% methacryloloxyethyl monomer, or poly-(methacryloloxyethyl dimethylhydroxyethyl ammonium chloride).

**Patentansprüche**

1. Elektroleitfähige Polymerzusammensetzungen, enthaltend 90 bis 99,5 Gewichtsprozent eines wasserlöslichen, elektroleitfähigen Polymeren, ausreichende Mengen eines Stabilisators zur Einstellung eines pH-Werts von 8,0 oder darüber und 0,5 bis 10 Gewichtsprozent einer Polymerzusammensetzung eines (Mono- oder) Bis-(fluorierten alkyl)-phosphatesters der Formel

$$(C_mF_{2m+1}C_nH_{2n}O)_yPO(OM)_{3-y}$$

in der m eine ganze Zahl von 4 vis 10 ist, n eine ganze Zahl von 1 bis 11 ist, y 1 oder 2 bedeutet und M ein die Löslichkeit in Wasser bewirkendes Kation bedeutet, oder eines Ammonium-bis-(N-äthyl-2-perfluoralkylsulfonamidäthyl)-phosphats mit einem Gehalt an nicht mehr als 15 Prozent Ammonium-mono-(N-äthyl-2-perfluoralkylsulfonamidoäthyl)-phosphats, wobei der Alkylrest mehr als 95 Prozent $C_8$ enthält und der Fluorgehalt 50,2 bis 52,8 Prozent, bestimmt auf Feststoffbasis, ausmacht.

2. Zusammensetzungen nach Anspruch 1, dadurch gekennzeichnet, dass es sich bei dem Stabilisator um Kaliumhydroxid, Natriumhydroxid oder Ammoniumhydroxid handelt.

3. Zusammensetzungen nach Anspruch 1 oder 2, dadurch gekennzeichnet, dass es sich bei dem die Löslichkeit in Wasser bewirkenden Kation um Diäthanolamin handelt und $C_m$ und $C_n$ zusammen eine gerade Kette mit mindestens 8 Kohlenstoffatomen darstellen.

4. Elektroleitfähige Polymerzusammensetzungen nach Anspruch 3, dadurch gekennzeichnet, dass es sich beim Fluorkohlenwasserstoff um ein Diäthanolaminsalz eines (Mono- oder Bis)-(fluorierten alkyl)-phosphats der Formel von Anspruch 1 handelt, wobei der Alkylrest geradzahlig im Bereich von $C_8$ bis $C_{18}$ ist, der Fluorgehalt 52,4 bis 54,4 Prozent, bestimmt auf Feststoffbasis, ausmacht und M ein Alkalimetall-, Ammonium- oder substituiertes Ammoniumkation beduetet.

5. Zusammensetzungen nach einem der vorstehenden Ansprüche, dadurch gekennzeichnet, dass es sich beim elektroleitfähigen Polymeren um ein Kation-quaternäres Ammonium-Polymeres handelt.

6. Zusammensetzungen nach Anspruch 5, dadurch gekennzeichnet, dass es sich beim kationischen, quaternären Ammonium-Polymeren um Poly-(dimethyldiallylammoniumchlorid), ein Copolymeres aus Dimethyldiallylammoniumchlorid und Diacetonacrylamid mit einem Gehalt an 70 bis 98 Prozent Diallylmonomereinheiten, Polyvinylbenzyltrimethylammoniumchlorid, Polymethacryloloxyäthyltrimethylammoniumchlorid, Polymethacryloloxyäthyltrimethylammoniummethosulfat, Polyepichlorhydrin, das zu 80 bis 100 Prozent mit Trimethylamin quaternisiert ist, ein Copolymeres aus Acrylamid und Methacryloloxyäthyltrimethylammoniumchlorid mit einem Gehalt an 90 bis 99,5 Prozent Methacryloloxyäthyl-Monomerem oder Poly-(methcryloloxyäthyldimethylhydroxyäthylammoniumchlorid) handelt.

**Revendications**

1. Une composition de polymère électroconducteur contenant de 90 à 99,5% en poids d'un polymère électroconducteur soluble dans l'eau; des quantités suffisantes d'un stabilisant pour régler le pH à 8,0 ou plus; et de 0,5 à 10% en poids de la composition de polymère d'un ester phosphorique de mono ou bis-(alcoyle fluoré) de la formule:

$$(C_mF_{2m+1}C_nH_{2n}O)_yPO(OM)_{3-y}$$

dans laquelle *m* est un nombre entier compris entre 4 et 10, *n* est un nombre entier compris entre 1 et 11, *y* est 1 ou 2 et M est un cation ayant un effet de solubilisation dans l'eau; ou d'un bis-(N-éthyl-2-perfluoroalcoylsulfonamide éthyl)phosphate d'ammonium ne contenant pas plus de 15% de mono(N-éthyl-2-perfluoroalcoylsulfonamido éthyl)phosphate d'ammonium dans lequel le groupe alcoyle est à plus de 95% en $C_8$, la teneur en fluor est comprise entre 50,2% et 52,8% comme déterminé par rapport aux matières solides.

2. Une composition selon la revendication 1 dans laquelle le stabilisant est de l'hydroxyde de

potassium, de l'hydroxyde de sodium ou de l'hydroxyde d'ammonium.

3. Une composition selon la revendication 1 ou 2 dans laquelle le cation ayant un effet de solubilisation dans l'eau est dérivé de diéthanolamine et $C_m$ et $C_n$, pris ensemble, constituent une chaîne droite d'au moins huit atomes de carbone.

4. Une composition de polymère électroconducteur selon la revendication 3 dans laquelle le fluorocarbure est un sel de diéthanolamine d'un phosphate de mono ou bis(alcoyle fluoré) ayant la formule spécifiée dans la revendication 1 dans laquelle le groupe alcoyle contient un nombre pair d'atomes de carbone dans l'intervalle de 8 à 18 et M est un cation de métal alcalin, d'ammonium ou d'ammonium substitué.

5. Une composition selon l'une quelconque des revendications précédentes dans laquelle le polymère électroconducteur est un polymère à cation d'ammonium quaternaire.

6. Une composition selon la revendication 5 dans laquelle le polymère à cation d'ammonium quaternaire est du poly(chlorure de diméthyl diallyl ammonium), un copolymère de chlorure de diméthyl diallyl ammonium et de diacétone acrylamide contenant de 70 à 98% de mailles du monomère diallylique, du chlorure de polyvinylbenzyl triméthylammonium, du chlorure de polyméthacryoxyéthyl-triméthyl ammonium, du méthosulfate de polyméthacryloloxyéthyl triméthyl ammonium, une polyépichlorhydrine quaternisée à 80—100% avec la triméthylamine, un copolymère d'acrylamide et de chlorure de méthacryloloxyéthyl triméthyl ammonium contenant de 90 à 99,5% de monomère méthacryloloxyéthylé ou du poly-(chlorure de méthacryloloxyéthyl diméthylhydroxyéthyl ammonium).